# EUROPEAN PATENT APPLICATION

(11) **EP 3 696 531 A1**
(43) Date of publication of application: **19.08.2020**
(21) Application number: 19157284.1
(22) Date of filing: 14.02.2019
(51) Int. Cl.: G01N 9/36, G01F 23/292

(54) **DEVICE AND METHOD FOR MEASURING BULK AND/OR TAPPED DENSITY, AS WELL AS PACKING DYNAMICS**

(71) Applicant: Granutools, 4340 Awans (BE)
(72) Inventor: LUMAY, Geoffroy, Paul, Eric, 4051 Vaux-sous-chèvremont (BE); FRANCQUI, Philippe, 1030 Bruxelles (BE); PIRARD, Simon, Jean, Ghislain, 4140 Sprimont (BE)
(74) Representative: Calysta NV

(57) **Abstract**

Device and method for measuring bulk and/or tapped density as well as packing dynamics comprising a driving mechanism (31), a vessel (5) with temperature adjusting means (7) for containing a powder sample having a predetermined mass, said vessel (5) being provided to move up and down upon the operation of said driving mechanism (31), and a laser distance measuring device,

## Description

The present invention relates to a device for measuring bulk and/or tapped density as well as packing dynamics comprising :
- a driving mechanism,
- a vessel provided for containing a powder sample having a predetermined mass, said vessel being provided to move up and down upon the operation of said driving mechanism, said vessel having a predetermined section, preferably a substantially constant section over height,
- a distance measuring device, provided for measuring a series of distance between a first reference point and a second point, and provided to output a signal containing value of each distance of said series of distance to a processing unit.

The bulk density of a powder sample is the ratio of the mass of a powder sample and to the volume of the same powder sample. It is typically expressed in g/ml and depends not only on the powder particles, but also on the shape of particles, the interparticulate interactions between the powder sample particles. Typically, the bulk density is measured according to the European Pharmacopoeia chapter 2.9.34.

The tapped density is obtained by mechanically tapping a powdersample.The mechanical tapping of the powdersample results typically in a volume reduction of the powder sample, which is measured overtime until little further volume change is observed for the powder sample. Accordingly, the tapped density is calculated as being the predetermined mass of the powder sample and the volume of the powder sample when very little volume change is observed upon tapping. The European Pharmacopoeia chapter 2.9.34. also describe a generic method for measuring the tapped density of a powder sample.

A device as mentioned in the beginning allows to measure the bulk and/or tapped density as well as packing dynamics of a powder sample. Indeed, the device measures first the initial distance between the first reference point and a second point which can be a point of the uppermost surface of the powder sample for allowing one to calculate the height of the powder sample contained in the vessel having a predetermined section, preferably a substantially constant section over height.

The device may be for instance connected to a processing unit which can calculate the initial density of the powder device thanks to the predetermined mass on the sample powder.

Upon operation, the vessel encounters several moves (up and down) and the distance between the first reference point and the second point, moving together with the uppermost surface of the powder bed sample is recorded over time and moves.

After a predetermined amount of moves, the distance between the first reference point and the second point reaches a quite constant value between sequential taps.

The mass of the powder sample divided by the volume of the sample after several tapping gives the tapped density.

Such a device is know in the art, and has been for example commercialized under the trade name Granupack of company Granutools.

While being considered as one of the most accurate tool duly automatized and reducing as much as possible the human factor influencing the quality of the measurement of the tapped density, this known apparatus has an inductive sensor for measuring the distance between the first reference point and the second point. Accordingly, the apparatus require the presence of a cover element on the top of the powder sample having at least a metallic layer. The thickness of the cover element is therefore to be taken into account for calculating the height of the powder sample contained in the vessel and subsequently deriving the volume of the powder sample to finally calculate the density based on the predetermined mass of the powder sample.

Further, it has nevertheless appeared a need on the market to have a tool allowing to make it possible to measure the bulk and tapped density of a powder sample at different temperatures and not only at ambient temperature without being too much detrimental for the accuracy of the measurement.

The term "powder sample" according to the present invention means a solid sample able to flow, made by particles or grains having a mean particle size d₅₀ comprised between 1 nm and 5 mm. The vessel, for example a tube can be sized with respect to the mean particle size of the solid sample, such as to have a diameter at least 10 times the mean particle size. For instance, for solid sample having grains having a mean particles size d₅₀ comprised between 1 nm and 100 µm, it is preferable to use a diameter of the vessel of 26 mm. For mean particle size comprised between 1 and 5 mm, the diameter of the vessel will be preferably of at least 50 mm.

The present invention encounters to solve at least a part of these drawbacks by providing a device allowing to measure the bulk and tapped density of a powder sample over a broad range of temperatures comprised between -80°C and 300°C while keeping a reasonable accuracy of the bulk and tapped density measurement.

To solve this problem, it is provided according to the present invention, a device for measuring a bulk and/or tapped density as well as packing dynamics as mentioned in the beginning, wherein said vessel is provided with temperature adjusting means provided to cool or warm said vessel in order to perform density measurement at a predefined measurement temperature, and in that said distance measuring device is a laser distance measuring device, contained in a housing having an housing edge, provided to emit downwards a laserlight ray having a predetermined direction, said laser distance measuring device having a measurement position where the first reference point, located at an intersection between the housing edge and the laserlight ray is above the vessel and where the distance between the second point and the first reference point is comprised between 150 mm and 300 mm, said laser distance measuring device having a resolution comprised between 25 µm and 60 µm and a measuring range comprised between 60 mm and 350 mm.

As it can be see, the device according to the present invention device allows to measure the bulk and tapped density of a powder sample over a broad range of temperatures comprised between-80°C and 300°C while keeping a reasonable accuracy of the bulk and tapped density measurement.

Indeed, according to the present invention, the vessel provided to contain the powder sample is heated or cooled for allowing to measure a bulk or a tapped density at a wished temperature. However, as for example in devices where inductive sensors are used to measure the distance between the first reference point and the second point (which latter is displaced overtime downwards thanks to the compaction effect of the tapping movement) should be kept as short as possible otherwise the accuracy of the measurement is drastically negatively impacted.

Inductive sensors are heat sensitive and do not make it possible to keep accurate distance measures upon high temperature and if the bulk or tapped density is to be measured at 200°C or even more, the sensor is too much exposed to the temperature and become strongly damaged.

According to the present invention, it has been identified that it is possible to space the sensor and therefore increase the distance strongly between the sensor (first reference point) and the second point (displaced overtime downwards thanks to the compaction effect of the tapping movement) without impacting the accuracy of the bulk/tapped density.

Automated bulk/tapped density measurement device are providing a compaction curve to the user, showing the volume variation over time and tapping movements (taps). The volume variation over time between two consecutive taps are very small, requiring high accuracy of the distance measurement to provide compaction curve. When the compaction curve reaches a plateau, i.e. when the density does not vary very much over a series of taps, it is said that the density at this period of time or after a series of taps is the tapped density.

It was therefore surprising to be able to carry out distance measurement with high accuracy with a distant sensor located at a distance from the second point (displaced overtime downwards thanks to the compaction effect of the tapping movement) while keeping enough sensitivity. According to the present invention, it has been made possible to reach high sensitivity to detect small distance changes between two consecutive taps for providing a compaction curve and reduce the temperature effect in the sensor due to radiant heat from the warmed or cooled vessel by the temperature adjusting means.

Indeed, the location of the laser light measurement device has been optimized to be exposed at a temperature range between -10°C and 50°C, i.e. being far enough to not be too much warmed or cooled by the radiant heat from the warmed/cooled vessel. The location of the laser light measurement device is defined by the distance between the first reference point and the second point, i.e. comprised between 150 mm and 300 mm.

The first reference point is located at an intersection between the housing edge and the laser light ray.

Further, when located at a distance between 150 mm and 300 mm (between the first reference point and the second point), the laser light measurement device is exposed to said temperature range (-10°C and 50°C) and the impact on the accuracy of the measurement is reduced. Indeed, the laser light measurement device is characterized by a resolution between 25 µm and 60 µm when measuring distances comprised in the range between 60 mm and 350 mm.

The resolution and the range of measurement distance reflect together the stability index with respect to temperature of about 0,005 to 0,05 % by °C, preferably between 0,007 and 0,03 % by °C, more preferably between 0,008 and 0,02 % by °C and even most preferably between 0,009 and 0,012% by °C.

Advantageously, said driving mechanism is located under the vessel, preferably below a bottom platform on which said vessel is located, said driving mechanism being connected to the vessel by a coupling shaft provided for gliding through an orifice of said bottom platform and for impairing a series of tap movements to the vessel.

The vessel is located on a bottom platform. The driving mechanism is preferably located in a separated cavity having as top wall, the bottom platform upon which said vessel is located. The bottom platform is perforated for forming an orifice through which said coupling shaft goes through to connect the vessel to the driving mechanism. The coupling shaft can glide through the orifice up and down upon action of the driving mechanism. The isolation of the driving mechanism in a separated cavity allows to prevent powder contamination of the driving mechanism which can impact negatively its proper operation, but also isolate the driving mechanism from the radiant heat originating from the warmed/cooled vessel.

In a preferred embodiment, the coupling shaft is ended by a broader top portion having a diameter greater than the diameter of the shaft. The top portion comprises a peripheric shoulder for forming two flanges, a first flange and a second flange, preferably made as a monobloc piece. The top portion is located at the distal end of the coupling shaft and proximal end of the coupling shaft is in contact with the driving mechanism.

In a preferred embodiment, the vessel is an open-end tube without bottom portion and the first flange of the top portion of the coupling shaft is the bottom of the vessel.To this end, the first flange comprises a groove for accommodating an O-ring and has a diameter slightly lower than the diameter of the vessel. The first flange is tightly closing the vessel. The second flange is located between the first flange and the shaft of the coupling shaft and has a diameter preferably greater than the first flange. When the vessel is closed by the coupling shaft, the second flange is bearing surface for the wall of the vessel and reinforce the assembly of the vessel and the coupling shaft.

Further, the second flange having a diameter greater than the shaft diameter and therefore of the orifice through which the shaft glide up and down when in movement upon operation of the driving mechanism, the second flange forms additional protection against powder contamination of the driving mechanism, acting as an umbrella.

In a variant, the vessel is a tube having a bottom portion, which is connected to the coupling shaft by conventional means.

Preferably, the driving mechanism comprises a cam member rotating around an horizontal axis, said cam member being a single lobe or a multilobe cam member, comprising at least 2 lobes, preferably at least 3 lobes, more preferably at least 4 lobes, said coupling shaft connected to the vessel following the rotating movement of the cam member, wherein each lobe has a first portion having a soft curved profile provided to impair an upward movement to the vessel and a second portion having a substantially straight profile provided to impair a downward drop to the vessel, wherein the vessel is subjected to a predetermined potential energy and to the gravity upon falling downwards, each lobe being designed to simulate a tapping movement to the vessel upon rotation of the cam member, each revolution of the cam member conferring a number of tapping movement equal to the number of lobes of the cam member.

Advantageously, said device comprises a housing accommodating said vessel and said measuring device having a bottom surface, which is preferably made by said bottom platform below which the driving mechanism is located.

In a preferred embodiment of the device according to the present invention, said temperature adjusting means provided to cool or warm said vessel comprised a cooling or heating jacket, such as a warming mantle with an electric resistance or a double envelope in which a heat transfer fluid circulates or even a peltier cell, preferably coated by insulating layer

In a particularly preferred embodiment, the device according to the present invention for measuring a bulk and/or tapped density as well as packing dynamics comprising a processing unit connected to the laserdistance measuring device and provided to receive each distance measurement data performed by the laser distance measuring device, calculate the density of the powder corresponding to each distance measurement data and plotting the density corresponding to each tapping movement for drawing a compaction curve allowing to calculate the Hausner ratio (Hr) and other flowing and powder characteristics herein described as packing dynamics. The packing dynamics is quantified with the number of taps n_{1/2} needed to reach the density (ρ(500) + ρ(0))/2 corresponding to one half of the compaction range. A low value of n_{1/2} corresponds to a fast packing dynamics.. The Hausner ratio Hr is related to the compaction ratio and is calculated by the equation Hr = ρ(500) / ρ(0) , where ρ(0) is the initial bulk density and p(500) the tapped density computed obtained after 500 taps.

Advantageously, the device according to the present invention further comprises a temperature probe provided to measure the temperature of the vessel or of the powder sample.

The measurement online of the temperature allows to control that the measurement is done at the whished temperature for measuring the bulk/tapped density at a predetermined temperature. For some tapped/bulk or packing dynamics calculations, the processor does not need to take into account the dilatation/constriction of the vessel because the impact is not significant on the measurement. However, for some measurement, especially when the tapped/bulk or packing dynamics calculation is performed along a heating cycle or a heating cycle, the online temperature measurement is required to allow the processor to take into account the dilatation /constriction of the vessel upon cooling/heating. By having online temperature measurement, volume correction can be applied to the density calculation performed by the processor or not depending on the application.

In a further preferred embodiment according to the present invention, the laser distance measuring device is fixed on a substantially horizontal support connected to a vertical shaft, said horizontal support being able to rotate partially around one vertical axis in order to align the laser light axis with the second point and being vertically movable along said vertical shaft to adjust the height of the first reference point with respect to the second point, thereby ensuring smooth movement to the laser distance measuring device and accurate positioning of the laser distance measuring device within the measurement ranges according to the present invention.

In another further preferred embodiment, the device according to the present invention comprises a cover element provided for being accommodated within said vessel, having a top and a bottom wall substantially flat and parallel one to each other, each section of said cover element being at most lower than said predetermined section, preferably constant section of said vessel, said cover element being provided to be placed upon said powder sample when located in the vessel, the top wall comprising the second point, said cover optionally comprises a target area, enclosing said second point.

The cover element allows to ensure that the powder bed has a flat and horizontal upper surface for making sure the second point is positioned at a distance representative of the height of the powder bed in the vessel. It has further a role to isolate the vessel content from the environment and avoid heating loss. The cover element further contribute to reproductivity of the measures as it confers the powder bed an horizontal and flat surface. Thanks to this, the measurement should not mandatorily be done at the center of the bed or any other point, at any point of the upper surface a the cover element, the distance is almost the same, simplifying the alignment of the distance laser measurement device and the second point.

When a cover element is present, the processor takes into account the height of the cover element to calculate the height of the powder bed in the vessel.

Other embodiments of the device according to the present invention are mentioned in the appended claims.

The present invention relates to a process for measuring automatically bulk and/or tapped density as well as packing dynamics comprising the steps of:
- Introducing a sample of powder in a vessel, said sample of powder having a defined weight,
- A first measurement of a first distance between a reference point and a second point, said second point being provided for continuously indicating the height of the powder sample within said vessel, said first measurement step being provided for measuring the initial height of the powder sample in the vessel,
- Tapping said vessel a series of n times in order to have the powder sample tapped within said vessel,
- a series of n measurements of a series of n distances between said reference point and said second point.

The method according to the present invention is characterized in that said method further comprises a step of heating/cooling the vessel in order to impair a predetermined temperature to said sample of powder and in that said first measurement of a first distance and said n measurement of a series of n distances are made by a laser distance measuring device at a distance comprised between 60 mm and 350 mm, with a distance between said first reference point and the second point comprised between 150 mm and 300 mm, said laser distance measuring device having a resolution comprised between 25 µm and 60 µm.

In a preferred embodiment, the method according to the present invention further comprises a step of calculating a density of the sample of powder based on the height of the sample powder bed calculated from the distance between the first reference point and the second point, by a processing unit, said density being calculated by dividing the weight of the sample of powder by the volume, derived from the height of the sample powder in the vessel.

In a further preferred embodiment of the method according to the present invention, the density of the sample of powder is calculated for each distance of the series of n distances and preferably plotted towards each tap of said series of n taps conferred to the vessel for providing a compaction curve.

Advantageously, according to the present invention, a correction factor is applied to the density calculated based on a temperature measurement for taking into account the volume change of the vessel upon the influence of the heating/cooling step.

In another preferred embodiment of the method according to the present invention, an introduction tube is inserted inside the vessel before pouring the sample of powder, said sample of powder being poured in the introduction tube, which is lifted up at a substantially constant and low speed, letting the sample of powder in the vessel after lifting up the introduction tube.

advantageously, in the method according to the present invention, the laser distance measuring device is fixed on a substantially horizontal support connected to a vertical shaft, said horizontal support being able to rotate partially around one vertical axis in order to align the laser light axis with the second point and being vertically movable along said vertical shaft to adjust the height of the first reference point with respect to the second point.

More particularly, said introduction tube is inserted in one orifice of said substantially horizontal support, said substantially horizontal support having a rotation center, and wherein the distance along an horizontal plan between the rotation center and a center of said introduction tube is equal to the distance between a vertical axis passing through said first reference point of the laser distance measuring device and said rotation center.

Other embodiments of the method according to the present invention are mentioned in the appended claims

Other characteristics and advantages of the present invention will be derived from the non-limitative following description, and by making reference to the drawings and the examples.

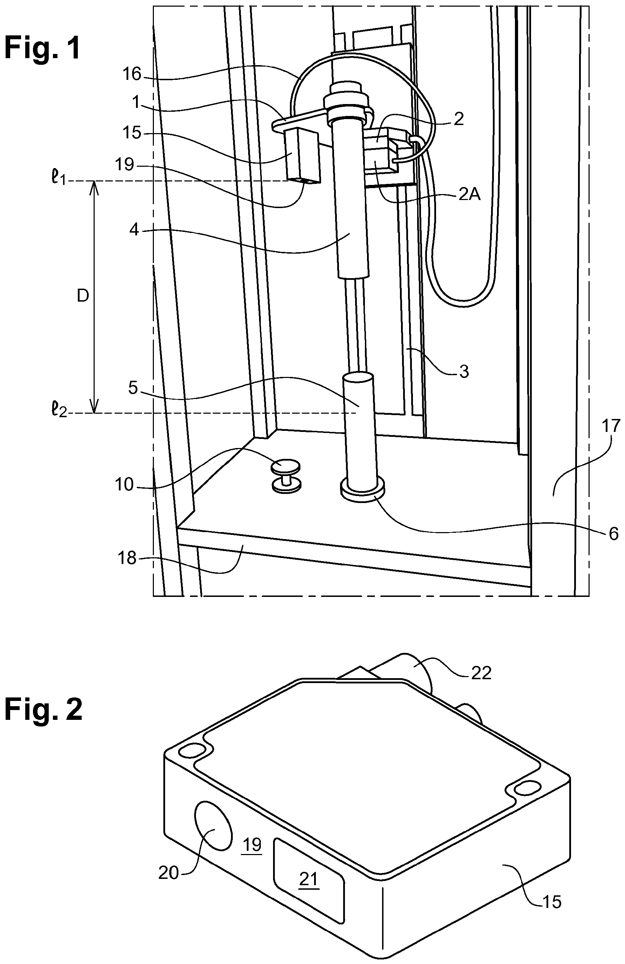

In the drawings, figure 1 is a general view of the device according to the present invention.

Figure 2 is a perspective view of the laser distance measuring device.

Figure 3 is an exploded schematic view of the vessel (cross-section of the vessel) and the lateral view of the coupling element.

Figure 4a is a lateral view of the cover element and Figure 4B is a top view of the cover element.

Figure 5 is a perspective view of a prehension means.

Figure 6 is a perspective view of another prehension means.

Figure 7 is a front view of the introduction tube.

Figure 8 is a cross section of the came member.

Figure 9 shows compaction curves obtained from the examples.

In the drawings, the same reference numbers have been allocated to the same or analog element

As it can be seen in figure 1, the present invention relates to a device for measuring bulk and/or tapped density as well as packing dynamics which comprises a bottom basis 18 comprising a platform and enclosing a cavity and upon which a housing 17 is mounted. The platform is the bottom platform of the housing. Along the rear wall of the housing, a vertical support element is present having a guiding system made of two rails 3. A motorized support 2 is provided to move upwards and downwards in the two rails 3 upon the action of a motor (not shown). A substantially horizontal support 1 in the form of a rotatably plate 1 is mounted on the motorized support 2. The rotatably plate 1 has a rotation center through which a vertical axis passes, being the pivot axis and is able to horizontally rotate manually or upon the action of another motor 2A different from the motor for moving upward and downwards the motorized support 2.

The device according to the present invention also comprises a vessel 5 provided for containing a sample of powder. The vessel is, in this preferred embodiment, closed by a coupling element having a flange 6 supporting the wall of the vessel. The vessel has a predetermined section, for example a substantially constant section over height

A distance measuring device 15 is fixed on the rotatable plate 1. The distance measuring device 15 is a laser distance measuring device 15 contained in a housing having an housing edge 19.

The laser distance measuring device is connected to a processing unit by a connection 16 which is provided to output data of the measured distance and transport them to the processing unit (not shown).

A cover element 10 is foreseen as an accessory of the device according to the present invention.

An introduction tube 4 is accommodated in a recess formed in the support rotatable plate 1, said introduction tube being an hollow tube (without bottom wall).

Upon operation, the operator weight a sample of powder and introduces the powder sample in the vessel 5 thanks to the introduction tube 4.

During this loading operation, the introduction tube 4 is glided inside the vessel 5 and the rotatable plate 1 is in the loading position. The rotatable plate 1 is rotated until the instruction tube 4 is aligned above the vessel 5 and is moved downwards until the introduction tube 4 enters the vessel 5. The powder is poured into the introduction tube 4 by the operator.

The rotatable plate 1 is afterwards moved upwards with the introduction tube 4, thereby leaving the powder sample in the vessel 5 in a very reproductible way and rotated into its measuring position where the laser distance measurement device is aligned above the vessel.

When the powder sample is located in the vessel 5, it forms a powder bed having an upper surface.

A driving mechanism (not shown) is located in the cavity of the basis 18 and is provided to impair upwards and downwards movement (taps) to the vessel to simulate tapping movement to the vessel towards the bottom of the vessel.

When applying taps to the vessel 5 and hence to the powder sample contained therein, the particles of the powder sample are packed one towards each other and the volume of the powder is reduced overtime and overtaps.

The laser distance measuring device 15 is provided for measuring initially the distance D between a first reference point (level l1) and a second point (level l2) to represent the initial height of the powder bed in the vessel. The initial height will be then converted into an initial volume and to an initial density; i.e. the bulk density of the sample of powder.

The said second point represent the level of powder in the vessel 5 and can be any point of the upper surface of the powder bed in the vessel 5 or any point of an upper surface of a cover element, lying on the powder bed, such as cover element 10 shown in figure 1.

The laser distance measuring device 15 emits downwards a laser light ray a predetermined direction, preferably, vertical. The first reference point is located at an intersection between the housing edge 19 (level l1) and the laser light ray (see figure 2 for more details).

When taps are applied to the vessel 5, the height of the powderbed changes and the second point (level l2) is moving slowly downwards, upon the taps effect. Accordingly, the laser measuring device measures the powder bed height after each tap and hence, a series of distances D between the first reference point (level l1) and the second point (level 12) is measured. The powder bed height after each tap is converted into a volume of the powder bed after each tap and to a density after each tap.

In the illustrated embodiment in figure 1, the laser distance measuring device 15 is provided to output a signal containing value of each distance D of said series of distances D to a processing unit with connection 16.

As it can be seen in more details in figure 2, the distance laser measuring device is contained in a housing having housing edges 19 and is a laser emitting a laser ray through a transmitting hole 20. The housing include a port 22 to connect the distance laser measuring device to the connection 16 for communication with the processor. Further a window 21 is provided for containing receiver optics receiving back the reflected laser ray at the second point for measuring the distance.

In the measurement position, the rotatable plate 1 is rotated to align the first reference point above the vessel 5. The rotatable plate 1 is able to rotate partially around a vertical axis in order to align the laser ray axis with the second point. The distance laser measuring device is as aforementioned vertically movable along said vertical shaft to adjust the height (level l1) of the first reference point with respect to the second point (level 12) with smooth movement and accurate positioning of the laser distance measuring device within the measurement ranges comprised between 60 mm and 350 mm according to the present invention.

The distance between the second point and the first reference point is comprised between 150 mm and 300 mm for any distance D measurement, said laser distance measuring device having a resolution comprised between 25 µm and 60 µm.

The location of the laser light measurement device has been optimized to be exposed at a temperature range between -10°C and 70°C, i.e. being far enough to not be too much warmed or cooled by the radiant heat from the warmed/cooled vessel 5. The location of the laser light measurement device is defined by the distance between the first reference point and the second point, i.e. comprised between 150 mm and 300 mm.

Further, when located at a distance between 150 mm and 300 mm (between the first reference point and the second point), the laser light measurement device is exposed to said temperature range (-10°C and 50°C) and the impact on the accuracy of the measurement is reduced. Indeed, the laser light measurement device is characterized by a resolution between 25 µm and 60 µm when measuring distances comprised in the range between 60 mm and 350 mm.

The resolution and the range of measurement distance reflect together the stability index with respect to temperature of about 0,005 to 0,05 % by °C, preferably between 0,007 and 0,03 % by °C, more preferably between 0,008 and 0,02 % by °C and even most preferably between 0,009 and 0,012% by °C.

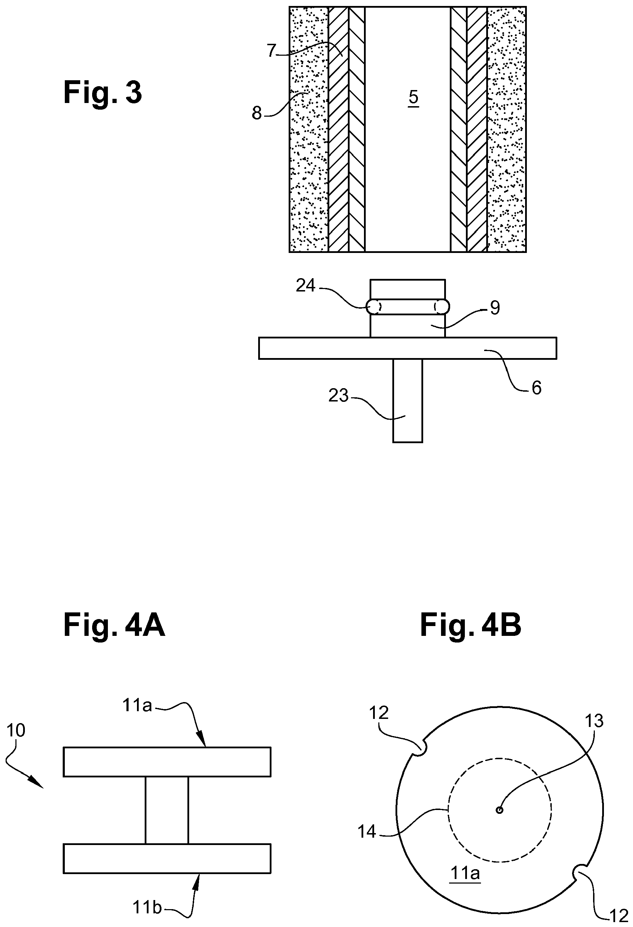

As it can be seen in figure 3, showing in greater details the vessel 5 (in cross-sectional view), the vessel 5 is preferably an end-less tube 5 is provided with temperature adjusting means 7, such as a cooling or heating jacket 7, coated by insulating layer8. The temperature adjusting means 7 are provided to cool or warm said vessel in order to perform density measurements at a predefined measurement temperature.

The vessel 5 i.e. an end-less tube without bottom portion is closed by a coupling shaft 23 (lateral view). The coupling shaft 23 is ended by a broader top portion (6, 9) having a diameter greater than the diameter of the shaft 23. The top portion comprises a peripheric shoulder for forming two flanges, a first flange 9 and a second flange 6, preferably made as a monobloc piece, more preferably having a rim (not shown). The top portion is located at the distal end of the coupling shaft 23 and proximal end of the coupling shaft 23 is in contact with the driving mechanism.

As it can be seen, the first flange 9 of the top portion of the coupling shaft 23 is the bottom of the vessel 5. To this end, the first flange 9 comprises a groove for accommodating an O-ring 24 and has a diameter slightly lowerthan the diameter of the vessel 5, while the O-ring has a slightly higher diameter relative to the diameter of the vessel to ensure tightness of the assembly. The first flange 9 is tightly closing the vessel 5. The second flange 6 is located between the first flange 9 and the shaft 23 of the coupling shaft 23 and has a diameter preferably greater than the first flange 9.

When the vessel 5 is closed by the coupling shaft 23, the second flange 6 is bearing surface for the wall (wall of the vessel 5 as such, the heating/cooling jacket 7 and insulating layer 8) of the vessel 5 and reinforce the assembly of the vessel 5 and the coupling shaft 23.

The coupling shaft is introduced in one orifice of the platform of the bottom basis 18, the bottom platform of the housing 17 to contact the driving mechanism located below the bottom platform 18.

Accordingly, the driving mechanism is located under the vessel 5, below a bottom platform 18 on which said vessel 5 is located. The driving mechanism is connected to the vessel by the coupling shaft 23 provided for gliding through the orifice of said bottom platform 18 and for impairing a series of tap movements to the vessel.

While the vessel 5 is located on a bottom platform 18. The driving mechanism is preferably located in a separated cavity having as top wall, the bottom platform 18 upon which said vessel 5 is located. The bottom platform 18 is perforated for forming an orifice through which said coupling shaft 23 goes through to connect the vessel 5 to the driving mechanism. The coupling shaft 23 can glide through the orifice up and down upon action of the driving mechanism. The isolation of the driving mechanism in a separated cavity allows to prevent powder contamination of the driving mechanism which can impact negatively its proper operation, but also isolates the driving mechanism from the radiant heat originating from the warmed/cooled vessel 5.

The second flange 6 of the coupling element has a diameter greater than the shaft diameter and therefore than the orifice through which the shaft glide up and down when in movement upon operation of the driving mechanism and hence the second flange 6 forms additional protection against powder contamination of the driving mechanism, acting as an umbrella.

Figure 4A shows the cover element 10 in greater details. The cover element 10 is provided for being accommodated within said vessel 5, and for lying on the upper surface of the bed powder of the sample. The cover element 10 has a top wall 11 a and a bottom wall 11 b. The top wall 11 a and the bottom wall 11 b are substantially flat and parallel one to each other. When a cover element 10 is used, it is preferable that the vessel 5 has a predetermined section, preferably a constant section overheight and in such a case, each section of said cover element 10 is at most lower than said predetermined section, preferably constant section of said vessel 5. In this situation, the position of the cover element 10 inside the vessel 5has no restriction, while when the section of the vessel is not constant, the profile of the cover element 10 should be complementary to the profile of the vessel 5 at the position it is expected the upper surface of the powder bed of the sample be located.

To reduce as much as possible the impact of the weight of the cover element 10 when placed upon the powder bed in the vessel5, the weight of the cover element 10 should be as low as possible, but nevertheless done in a material not being sensitive to heat.

Accordingly, according to the present invention, it is foreseen the cover element to be a hollow cylinder or two circular plates connected by a central axis to reduce the weight of the cover element 10.

As it can be seen in figure 4B, when the coverelement 10 is used, the top wall 11 a comprises the second point 13. The cover element 10 optionally comprises a target area 14, enclosing said second point 13. When a cover element 10 is present, the processor takes into account the height of the cover element 10 to calculate the height of the powder bed in the vessel 5.

The cover element 10 ensures that the powder bed has a flat and horizontal upper surface in such a way the second point 13 is positioned at a distance representative of the height of the powder bed in the vessel 5. It has further a role to isolate the vessel content from the environment and avoid heating loss.

The cover element 10 further contribute to reproductivity of the measures as it confers the powder bed an horizontal and flat surface. Thanks to this, the measurement should not mandatorily be done at the center of the bed but can be done at any other point, preferably within the target area 14, since at any point of the upper surface of the cover element 10, the distance is almost the same, simplifying the alignment of the distance laser measurement device 15 and the second point 13.

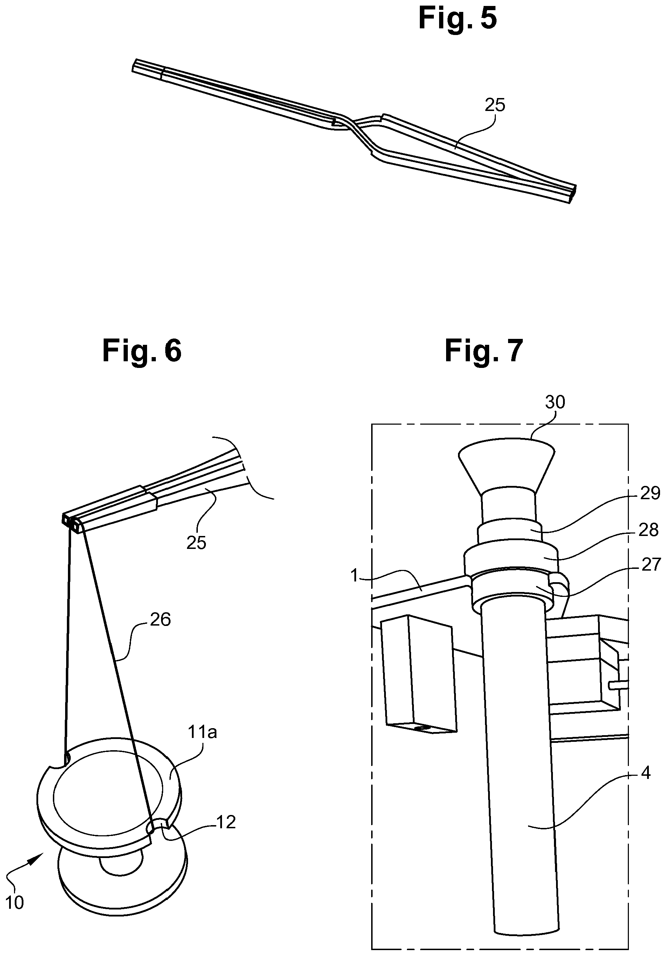

The cover element 10 also comprises two recesses 12 in the top wall to introduce arms of a tweezer, preferably arms of a reverse tweezer. An exemplary tweezer used according to the present invention 25 is illustrated in figure 5.

While the arms of the tweezer 25 can be directly introduced in the recesses of the cover element 10, it is also foreseen according to the present invention to use a portion 26 of yarn, cord, thread, twine and the like to minimize the impact shock on the bed powderwhen placing the coverelement 10 on the top of the sample in the vessel. This embodiment is illustrated at figure 6. When such a portion 26 of yearn, cord, thread, twine and the like are used, one side on the portion 26 is permanently fixed to one arm of the tweezer 25. The cover element 10 is positioned on the bench next to the device according to the present invention. The tweezer 25 is taken by the operator. The portion 26 of the yearn, cord, thread, twine and the like is passed through the recesses 12, passing under the top wall 11a and the opposite side of the portion 26 of yearn, cord, thread, twine and the like is gripped between the two arms of the tweezer 25.

The cover element 10, is then pending from the tweezer 25 and is located by the operator above the bed of powder in the vessel. When carefully placed upon the bed of powder of the sample in the vessel 5, the tweezer 25 is opened, and pulled away from the cover element 10 slowly. The portion 26 of yearn, cord, thread, twine and the like is pulled up from the cover element 10 as a result without perturbating the bed of powder sample.

While not being mandatorily used, the use of the tweezer 25 with the cover element 10 reduce the packing effect that the positioning of the cover element 10 on top of the bed of powdersample may have and reduced the dependency towards the operator agility.

Figure 7 shows the introduction tube 4 in greater details. The introduction tube 4 is a hollow tube 4 without bottom wall i.e. an endless hollow tube. The introduction tube is provided at the upper portion 29 with two flanges 28 and 27 for suspending the introduction tube to the rotatably plate 1. The two flanges 28 and 27 can be two separated elements or a monobloc piece solidarized to an introduction tube 4 or even a monobloc element having an hollow section 4 with two flanges 28, 27.

The two flanges have different diameters and are separated by a shoulder. The two flanges are superimposed on to each other forming a lowerflange 27 and a higher flange 28.

The lower flange 27 has a diameter complementary to the diameter of the recess of the rotatable plate 1 in which it is to be inserted before loading the sample. The higher flange 28 has a higher diameter with respect to the lower flange 27, thereby forming a stop during the positioning of the introduction tube 4. The stop retain the introduction tube 4 within the recess of the rotatable plate 1 during the loading step. A funnel 30 is also advantageously used to pour the powder sample in the introduction tube 4.

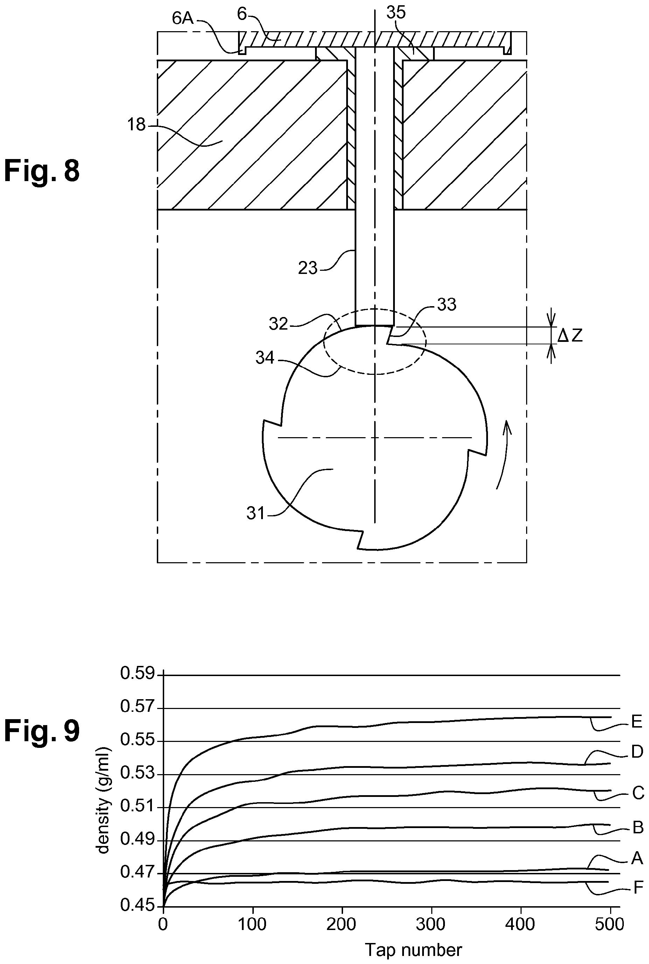

Figure 8 represents the driving mechanism. The driving mechanism comprises a cam member 31 rotating around an horizontal axis. The cam member 31 is a multilobe cam member, which comprises 4 lobes 34 in the illustrated embodiment. The coupling shaft 23, connected to the vessel 5 follows the rotating movement of the cam member 31. Each lobe 34 has a first portion having a soft curved profile 32 provided to impair an upward movement to the vessel and a second portion 33 having a substantially straight profile provided to impair a downward drop to the vessel. Each lobe 34 is designed to simulate a tapping movement to the vessel 5 upon rotation of the cam member 31. According to the present invention, the cam member 31 can be a single lobe, a multilobe profile having at least 2, 3 or 4 lobes.

Each revolution of the cam member 31 confers a number of tapping movement equal to the number of lobes 34 of the cam member. For each passage of a lobe 34, the vessel 5 containing the powder sample rose to a fixed height of ΔZ and performs free falls.

The free fall height is generally fixed to ΔZ between 0,5 mm and 10 mm, preferably between 1 and 5 mm, more preferably between 1 and 3 mm. The distance D between the first reference point (level l1) and the second point (level l2) is measured and the height h of the powderbed is calculated preferably automatically after each tap. From the height h, the volume V of the powderbed of the sample is computed. As the powder sample mass m is known, the density ρ is evaluated and plotted after each tap. The density is the ratio between the mass m and the powder bed volume V.

The Hausner ratio Hr is related to the compaction ratio and is calculated by the equation Hr = ρ(500) / ρ(0), where ρ(0) is the initial bulk density and p(500) the tapped density computed obtained after 500 taps.

As explained previously, the coupling shaft 23 is introduced in one orifice of the platform of the bottom basis 18, through an insert 35 to contact the driving mechanism located below the bottom platform 18.

The insert 35 is a wering part, easy to change, without having to replace the entire bottom platform. Further, the inset 35 can include ball bearing to facilitate the upwards and downward movement of the coupling element, while reducing friction.

The wearing part 35 has a top flange to rely on the platform having a thickness higher than the height of the rim 6A of the second flange 6 of the coupling element. The rim 6A contribute to the umbrella effect of the coupling element. The rim 6A also ensure that the free fall of the vessel is terminated when the bottom wall of the vessel (first flange 9) in one block with the second flange 6 of the coupling element abuts the flange of the insert 35, creating a small shock, contributing to the tapping effect to the powder sample.

Accordingly, the driving mechanism is located under the vessel 5, below a bottom platform 18 on which said vessel 5 is located. The driving mechanism is connected to the vessel by the coupling shaft 23 provided for gliding through the orifice of said bottom platform 18 and for impairing a series of tap movements to the vessel.

While the vessel 5 is located on a bottom platform 18. The driving mechanism is preferably located in a separated cavity having as top wall, the bottom platform 18 upon which said vessel 5 is located. The bottom platform 18 is perforated for forming an orifice through which said coupling shaft 23 goes through to connect the vessel 5 to the driving mechanism. The coupling shaft 23 can glide through the orifice up and down upon action of the driving mechanism. The isolation of the driving mechanism in a separated cavity allows to prevent powder contamination of the driving mechanism which can impact negatively its proper operation, but also isolates the driving mechanism from the radiant heat originating from the warmed/cooled vessel 5.

The second flange 6 of the coupling element has a diameter greater than the shaft diameter and therefore than the orifice through which the shaft glide up and down when in movement upon operation of the driving mechanism and hence the second flange 6 forms additional protection against powder contamination of the driving mechanism, acting as an umbrella.

### Examples.-

### Example 1:

A sample of polyamide 2200 has been weighted and poured in the introduction tube before being poured in the vessel according to the introduction methodology described above.

The sample was heated at a temperature of 50°C.

A series of 500 tapping movement (free falls of 1 mm) have been applied during which the distance between the housing edge of the laser distance measuring device and the cover element was measured for each tap.

Each of the 500 density calculation have been performed by the processor, each density corresponding to a tapping movement, except the initial density.

The densities thereby calculated are shown on table 1 (for each 10 taps until 400 and then for 500 taps) but have been all plotted on a graph as shown in figure 9 towards the tapping movement duly perfomed (Curve D). Further, the Hausner ratio is calculated and shown in table 2.

### Example 2.-

Example 1 has been reproduced except that the powder sample was heated at a temperature of 75°C.

The densities thereby calculated are shown on table 1 (for each 10 taps until 400 and then for 500 taps) but have been all plotted on a graph as shown in figure 9 towards the tapping movement duly performed (Curve C). Further, the Hausner ratio is calculated and shown in table 2.

### Example 3.-

Example 1 has been reproduced except that the powder sample was heated at a temperature of 100°C.

The densities thereby calculated are shown on table 1 (for each 10 taps until 400 and then for 500 taps) but have been all plotted on a graph as shown in figure 9 towards the tapping movement duly performed (Curve B). Further, the Hausner ratio is calculated and shown in table 2.

### Example 4.-

Example 1 has been reproduced except that the powder sample was heated at a temperature of 125°C.

The densities thereby calculated are shown on table 1 (for each 10 taps until 400 and then for 500 taps) but have been all plotted on a graph as shown in figure 9 towards the tapping movement duly performed (Curve A). Further, the Hausner ratio is calculated and shown in table 2.

### Example 5.-

Example 1 has been reproduced except that the powder sample was kept at ambient temperature (22°C).

The densities thereby calculated are shown on table 1 (for each 10 taps until 400 and then for 500 taps) but have been all plotted on a graph as shown in figure 9 towards the tapping movement duly performed (Curve E). Further, the Hausner ratio is calculated and shown in table 2.

### Comparative example.-

Example 1 has been reproduced except that the powder sample was heated at 150°C.

The densities thereby calculated have been plotted on a graph as shown in figure 9 towards the tapping movement duly performed (Curve F).

**Table 1.-**

| **Taps** | **Ex. 5 (g/ml) T°C = 22°C** | **Ex. 1 (g/ml) T°C = 50°C** | **Ex. 2 (g/ml) T°C = 75°C** | **Ex. 3 (g/ml) T°C = 100°C** | **Ex. 4 (g/ml) T°C = 125°C** |
|---|---|---|---|---|---|
| 1 | 0,467 | 0,453 | 0,453 | 0,461 | 0,455 |
| 10 | 0,516 | 0,491 | 0,479 | 0,471 | 0,459 |
| 20 | 0,531 | 0,504 | 0,49 | 0,477 | 0,462 |
| 30 | 0,537 | 0,513 | 0,498 | 0,481 | 0,464 |
| 40 | 0,542 | 0,516 | 0,501 | 0,484 | 0,466 |
| 50 | 0,545 | 0,518 | 0,502 | 0,485 | 0,467 |
| 60 | 0,547 | 0,522 | 0,506 | 0,487 | 0,468 |
| 70 | 0,549 | 0,523 | 0,507 | 0,488 | 0,467 |
| 80 | 0,551 | 0,525 | 0,509 | 0,492 | 0,468 |
| 90 | 0,551 | 0,526 | 0,51 | 0,492 | 0,468 |
| 100 | 0,553 | 0,526 | 0,513 | 0,492 | 0,468 |
| 110 | 0,553 | 0,527 | 0,513 | 0,492 | 0,47 |
| 120 | 0,554 | 0,529 | 0,513 | 0,492 | 0,47 |
| 130 | 0,554 | 0,53 | 0,513 | 0,493 | 0,47 |
| 140 | 0,555 | 0,531 | 0,513 | 0,493 | 0,468 |
| 150 | 0,558 | 0,532 | 0,513 | 0,495 | 0,47 |
| 160 | 0,559 | 0,532 | 0,513 | 0,494 | 0,469 |
| 170 | 0,559 | 0,533 | 0,514 | 0,496 | 0,47 |
| 180 | 0,559 | 0,533 | 0,515 | 0,497 | 0,47 |
| 190 | 0,559 | 0,534 | 0,516 | 0,497 | 0,47 |
| 200 | 0,559 | 0,534 | 0,517 | 0,497 | 0,471 |
| 210 | 0,559 | 0,534 | 0,517 | 0,498 | 0,47 |
| 220 | 0,559 | 0,534 | 0,517 | 0,499 | 0,471 |
| 230 | 0,559 | 0,535 | 0,517 | 0,497 | 0,471 |
| 240 | 0,561 | 0,535 | 0,518 | 0,497 | 0,471 |
| 250 | 0,559 | 0,535 | 0,518 | 0,498 | 0,472 |
| 260 | 0,561 | 0,535 | 0,518 | 0,499 | 0,471 |
| 270 | 0,561 | 0,535 | 0,518 | 0,498 | 0,47 |
| 280 | 0,562 | 0,535 | 0,518 | 0,497 | 0,47 |
| 290 | 0,562 | 0,535 | 0,519 | 0,498 | 0,47 |
| 300 | 0,562 | 0,535 | 0,519 | 0,498 | 0,471 |
| 310 | 0,563 | 0,535 | 0,52 | 0,499 | 0,471 |
| 320 | 0,563 | 0,535 | 0,519 | 0,498 | 0,471 |
| 330 | 0,563 | 0,535 | 0,519 | 0,498 | 0,472 |
| 340 | 0,563 | 0,536 | 0,519 | 0,498 | 0,471 |
| 350 | 0,563 | 0,536 | 0,519 | 0,498 | 0,472 |
| 360 | 0,564 | 0,536 | 0,519 | 0,498 | 0,471 |
| 370 | 0,564 | 0,537 | 0,52 | 0,498 | 0,472 |
| 380 | 0,564 | 0,536 | 0,52 | 0,498 | 0,472 |
| 390 | 0,564 | 0,537 | 0,521 | 0,498 | 0,472 |
| 400 | 0,564 | 0,536 | 0,521 | 0,498 | 0,472 |
| 500 | 0,567 | 0,537 | 0,521 | 0,499 | 0,472 |

**Table 2.-**

| **Temp (°C)** | **rho0 (ρ0)** | **rho500 (ρ500)** | **Hr** |
|---|---|---|---|
| 22 | 0,467 | 0,567 | 1,214 |
| 50 | 0,453 | 0,537 | 1,185 |
| 75 | 0,453 | 0,521 | 1,150 |
| 100 | 0,461 | 0,499 | 1,082 |
| 125 | 0,455 | 0,472 | 1,037 |
| 150 | 0,463 | 0,465 | 1,004 |

As it can be seen, the device according to the present invention allows to measure bulk/tapped density very accurately for powder showing temperature sensitivity. However, for the sample of powder used in the example, at 150°C, the powder sample has encountered melting at the contact point between the grains and tapped density is very close to bulk density .

It should be understood that the present invention is not limited to the described embodiments and that variations can be applied without going outside of the scope of the appended claims.

For example, the present invention has been described as optimally operating at temperature between -80°C and 300°C. Of course, it is also contemplated within the present invention to use lower or higher temperature, provided the measuring device is not exposed to much to such temperature and impact from this latter.

Similarly, the horizontal plate has been described to be rotatable thanks to a motor, but it is obviously contemplated within the present invention to foresee a horizontal plate manually rotatable.

## Claims

1. Device for measuring bulk and or tapped density comprising :
- a driving mechanism (31),
- a vessel (5) provided for containing a powder sample having a predetermined mass, said vessel (5) being provided to move up and down upon the operation of said driving mechanism (31), said vessel (5) having a predetermined section, preferably a substantially constant section over height,
- a distance measuring device (15), provided for measuring a series of distance between a first reference point (level l1) and a second point (level l2), and provided to output a signal containing value of each distance of said series of distance to a processing unit,
**characterized in that** said vessel (5) is provided with temperature adjusting means (7) provided to cool or warm said vessel in orderto perform density measurement at a predefined measurement temperature, and **in that** said distance measuring device (15) is a laser distance measuring device, contained in a housing (15) having an housing edge (19), provided to emit downwards a laser light ray having a predetermined direction, said laser distance measuring device having a measurement position where the first reference point (level l1), located at an intersection between the housing edge (19) and the laser light ray is above the vessel (5) and where the distance (D) between the second point (level l2) and the first reference point (level l1) in comprised between 150 mm and 300 mm, said laser distance measuring device (15) having a resolution comprised between 25 µm and 60 µm and a measuring range comprised between 60 mm and 350 mm.

2. Device according to claim 1, wherein said driving mechanism (31) is located under the vessel (5), preferably below a bottom platform (18) on which said vessel (5) is located, said driving mechanism (31) being connected to the vessel (5) by a coupling shaft (23) provided for gliding through an orifice of said bottom platform (18) and for impairing a series of tap movements to the vessel (5).

3. Device according to claim 1 or claim 2, wherein the driving mechanism comprises a cam member (31) rotating around an horizontal axis, said cam member (31) being a single lobe (34) or a multilobes (34) cam member (31), comprising at least 2 lobes (34), preferably at least 3 lobes (34), more preferably at least 4 lobes (34), said coupling shaft (23) connected to the vessel (5) following the rotating movement of the cam member (31), wherein each lobe (34) has a first portion (32) having a soft curved profile provided to impair an upward movement to the vessel and a second portion (33) having a substantially straight profile provided to impair a downward drop to the vessel (5), wherein the vessel (5) is subjected to a predetermined potential energy and to the gravity upon falling downwards, each lobe (34) being designed to simulate a tapping movement to the vessel (5) upon rotation of the cam member (31), each revolution of the cam member (31) conferring a number of tapping movement equal to the number of lobes (34) of the cam member (31).

4. Device according to any of the claims 1 to 3, further comprising a housing (17) accommodating said vessel (5) and said measuring device (15) having a bottom surface (18).

5. Device according to any of the claims 1 to 4, wherein said temperature adjusting means (7) provided to cool or warm said vessel (5) comprises a cooling or heating jacket, preferably coated by insulating layer (8).

6. Device according to any of the claims 1 to 5, comprising a processing unit connected to the laser distance measuring device (15) and provided to receive each distance measurement data performed by the laser distance measuring device (15), calculate the density of the powder corresponding to each distance measurement data and plotting the density corresponding to each tapping movement for drawing a compaction curve.

7. Device according to any of the claims 1 to 6, comprising a temperature probe provided to measure the temperature of the vessel or of the powder sample.

8. Device according to any of the claims 1 to 7, wherein the laser distance measuring device (15) is fixed on a substantially horizontal support (1) connected to a vertical shaft, said horizontal support being able to rotate partially around one vertical axis in order to align the laser light axis with the second point and being vertically movable along said vertical shaft to adjust the height of the first reference point (level l1) with respect to the second point (level l2).

9. Device according to any of the claims 1 to 8, further comprising a cover element (10) provided for being accommodated within said vessel (5), having a top (11a) and a bottom wall (11b) substantially flat and parallel one to each other, each section of said cover element (10) being at most lowerthan said predetermined section, preferably constant section of said vessel (5), said cover element (10) being provided to be placed upon said powder sample when located in the vessel (5), the top wall comprising the second point, said cover optionally comprises a target area, enclosing said second point.

10. Method for measuring automatically bulk and/or tapped density as well as packing dynamics of a powder sample comprising the steps of:
- Introducing a sample of powder in a vessel (5), said sample of powder having a defined weight,
- A first measurement of a first distance between a first reference point (level l1) and a second point (level l2), said second point being provided for continuously indicating the height of the powder sample within said vessel, said first measurement step being provided for measuring the initial height of the powder sample in the vessel (5),
- Tapping said vessel (5) a series of n times in order to have the powder sample tapped within said vessel (5),
- a series of n measurements of a series of n distances between said reference point (level l1) and said second point (level l2),
**characterized in that** said method further comprises a step of heating/cooling the vessel (5) in order to impair a predetermined temperature to said sample of powder and **in that** said first measurement of a first distance and said n measurement of a series of n distances are made by a laser distance measuring device (15) at a distance comprised between 60 mm and 350 mm, with a distance between said first reference point and the second point comprised between 150 mm and 300 mm, said laser distance measuring device having a resolution comprised between 25 µm and 60 µm.

11. Method according to claim 10, further comprising a step of calculating a density of the sample of powder based on the height of the sample powder calculated from the distance between the first reference point (level l1) and the second point (level l2), by a processing unit, said density being calculated by dividing the weight of the sample of powder by the volume, derived from the height of the sample powder in the vessel (5).

12. Method according to claim 10 or claim 11, wherein density of the sample of powder is calculated for each distance of the series of n distances and preferably plotted towards each tap of said series of n taps conferred to the vessel (5) for providing a compaction curve.

13. Method according to any of the claims 10 to 12, wherein a correction factor is applied to the density calculated based on a temperature measurement for taking into account the volume change of the vessel (5) upon the influence of the heating/cooling step.

14. Method according to any of the claims 10 to 13, wherein an introduction tube (4) is inserted inside the vessel (5) before pouring the sample of powder, said sample of powder being poured in the introduction tube (4), which is lifted up at a substantially constant and low speed, letting the sample of powder in the vessel (5) after lifting up the introduction tube.

15. Method according to any of the claims 10 to 14, wherein the laser distance measuring device (15) is fixed on a substantially horizontal support (1) connected to a vertical shaft, said horizontal support (1) being able to rotate partially around one vertical axis in order to align the laser light axis with the second point and being vertically movable along said vertical shaft to adjust the height of the first reference point (level l1) with respect to the second point (level l2).

16. Method according to claim 15, wherein said introduction tube (4) is inserted in one orifice of said substantially horizontal support (1), said substantially horizontal support (1) having a rotation center, and wherein the distance along an horizontal plan between the rotation center and a center of said introduction tube (4) is equal to the distance between a vertical axis passing through said first reference point of the laser distance measuring device (15) and said rotation center.
